# EUROPEAN PATENT APPLICATION

(11) **EP 3 663 713 A1**
(43) Date of publication of application: **10.06.2020**
(21) Application number: 18382889.6
(22) Date of filing: 03.12.2018
(51) Int. Cl.: G01C 11/02, G01B 11/03, G06T 7/80, G06T 7/73

(54) **CALIBRATION METHOD FOR CALIBRATING A MULTI-CAMERA SYTEM AND MULTI-CAMERA SYSTEM**

(71) Applicant: Ideko, S.Coop., 20870 Elgoibar (ES)
(72) Inventor: MENDIKUTE GARATE, Alberto, 20870 ELGOIBAR (ES); LEIZEA ALONSO, Ibai, 20870 ELGOIBAR (ES); AGUINAGA HOYOS, Iker, 20018 GIPUZKOA, San Sebastián (ES)
(74) Representative: Plasseraud IP

(57) **Abstract**

The present invention relates to a calibration method for calibrating a multi-camera system for the photogrammetric measurement of an object of a measurement scenario (E), which method comprises using cameras (C1, C2) for visualizing the measurement scenario (E); using a support structure (S) which is arranged in the measurement scenario (E) and has a removable fixing point (S1, S2) for each of the cameras (C1, C2), wherein each removable fixing point (S1, S2) of the support structure (S) has a center of reference (Zo1, Zo2) which has been previously calibrated with respect to a center of reference (Zo) of the measurement scenario (E); using an optimum calibration element (T1, T2) for each camera (C1, C2), each optimum calibration element (T1, T2) having references (r) which can be observed by the respective camera (C1, C2), and independently calibrating each camera (C1, C2), using its optimum calibration element (T1, T2), with respect to its fixing point in the previously calibrated support structure (S) .

## Description

### Field of the Art

The present invention relates to the field of vision metrology, proposing a calibration process for calibrating a multi-camera measurement system for photogrammetric measurement with which a high precision of the order of 0.01 mm in a cubic meter of volume can be achieved in the measurements taken by the cameras.

### State of the Art

In the industrial sector, contactless measurement systems with which the orientation and actual position of an object in space can be efficiently determined are gaining significant interest in recent years.

In this regard, laser trackers, which are measurement systems with a high level of precision close to 0.01 mm and with which large objects can be measured due to their high working range, are known. However, they are systems with a high economic cost, and furthermore, given that the principle of measurement is interferometry, the measured distances are relative, so if the beam of the laser tracker is interrupted, the measuring process must be restarted.

Optical CMMs, also known as vision trackers, are among the alternatives to laser trackers. This technology is most widely used today in the field of vision metrology and is based on equipment integrating two or three cameras precalibrated with control software which picks up the position of several markers placed on a part, where its position can be recognized and processed.

Multi-camera systems are an alternative solution to a laser and vision tracker which have a suitable precision and a low cost. These systems consist of cameras strategically arranged in a measurement scenario in which the object to be measured is located, and software using photogrammetry as the principle of measurement to process images captured by the cameras and determine the orientation and position of the measured object.

These systems furthermore standout for their flexibility and personalization which allow providing an indefinite number of cameras located in the manner that best suits each application; however, the industrial implementations of these systems are limited at present.

On the other hand, as they are photogrammetry-based systems, their precision is lower than the precision or a laser and vision tracker. The precision of the measurement system depends on several factors, such as the quality of the reference markers used, the image processing techniques used, or the computing methods chosen for resolving same; however, it has been found that the camera calibration process is essential to improve precision.

The calibration process consists essentially of estimating both the position and the orientation of the camera in the measurement scenario, as well as the intrinsic characteristics thereof, such as the focal length, distortion factors, and central points of the image plane.

The calibration process that is the most widely used today consists of firmly fixing at least three cameras in the measurement scenario, such that the fixing assures the immobilization of the cameras, and then arranging in the measurement scenario a calibration element with several references, which is observed at the same time by all the cameras, such that each camera observes a portion of the calibration element. According to the foregoing, a calibration process is performed in a single step, in which with at least three photographs, one per camera, a self-calibration process between the cameras is performed, with the position and orientation of each camera in the measurement scenario, as well as the intrinsic characteristics thereof, being determined at that time.

This method only allows obtaining precisions of the order of 0.1 mm, which poses a problem in applications in which the measurement scenario is large and/or the object to be measured is far away from the cameras, because the measurement error increases with the distance of the object with respect to the camera. To improve precision, it would be necessary to provide a calibration element with many references which would, however, considerably increase the data processing time. Furthermore, in large measurement scenarios, several cameras must be used to cover the scenario, so calibration may not be technically feasible.

There is therefore a need for an alternative calibration method for photogrammetry-based multi-camera systems with which the measurement precision of the cameras can be improved.

### Object of the Invention

The invention proposes a method for calibrating a multi-camera photogrammetric measurement system in which, unlike the calibration processes of the state of the art in which a self-calibration of the cameras is performed in a single step, the proposed camera calibration method is divided into two steps, so the precision in the measurements that are taken is improved, with the further ability to obtain precisions below 0.1 mm and up to 0.01 mm in a cubic meter of volume.

The proposed calibration method comprises:
- using cameras for visualizing a measurement scenario,
- using a support structure which is arranged in the measurement scenario and has a removable fixing point for each of the cameras, wherein each removable fixing point of the support structure has a center of reference which has been previously calibrated with respect to a center of reference of the measurement scenario,
- using an optimum calibration element for each camera, each optimum calibration element having references which can be observed by the respective camera, and
- independently calibrating each camera, using its optimum calibration element, with respect to its fixing point in the previously calibrated support structure.

In this manner, the fixing points of the support structure at which the cameras will be fixed are calibrated in one step, and each camera is independently calibrated in another step with a calibration element, which is the optimum element for calibrating the camera.

The previously calibrated support structure allows knowing the position and orientation of each camera in the measurement scenario, whereas the intrinsic characteristics of each camera can be obtained in the best way possible with the optimum calibration element.

According to the foregoing, the proposed calibration method allows considerably increasing precision in the measurements taken by the cameras with respect to the calibration systems of the state of the art in which the cameras self-calibrate with respect to one another.

Furthermore, using the previously calibrated support structure, in which the removable fixing points of the cameras have already been calibrated with respect to the center of reference of the measurement scenario, allows the calibration of the cameras with their optimum calibration element to be performed outside the measurement scenario, if required, so once each camera is independently calibrated, it simply needs to be fixed in the support structure.

Furthermore, the previously calibrated support structure allows the cameras to be connected to and disconnected from the support structure for the necessary function (maintenance, replacement of the camera, etc.) without having to perform a new calibration of the system every time a camera is fixed again.

Another object of the present invention relates to the multi-camera system for the photogrammetric measurement of the object available in the measurement scenario. The multi-camera system comprises:
- cameras for visualizing the measurement scenario, and
- a support structure which is arranged in the measurement scenario,
   ∘ the support structure having a removable fixing point for each of the cameras, wherein each fixing point of the support structure has a center of reference which is calibrated with respect to a fixed center of reference of the measurement scenario.

### Description of the Drawings

Figure 1 shows a multi-camera system for photogrammetric measurement using a self-calibration process of the cameras according to the prior state of the art.
Figure 2 shows a multi-camera system for photogrammetric measurement according to the invention.

### Detailed Description of the Invention

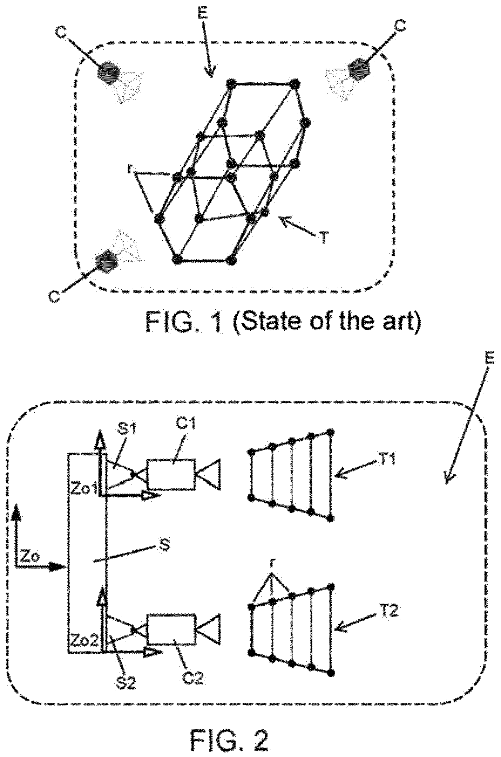

Figure 1 shows a multi-camera system for photogrammetric measurement according to the prior state of the art comprising at least three cameras (C) strategically arranged for visualizing a measurement scenario (E) in which an object to be measured is available.

Conventionally, the calibration process used for calibrating this system requires firmly fixing the cameras (C) in the measurement scenario (E), and then arranging in the measurement scenario (E) a calibration element (T) with several references (r) which is observed by all the cameras (C), wherein each of the cameras (C) visualizes a portion of the calibration element (T).

With this arrangement, each of the cameras (C) takes a 2D photograph of the calibration element, and a self-calibration process of the cameras is performed only with the information obtained from the three photographs, with the position and orientation of each camera (C) in the measurement scenario (E), as well as the intrinsic characteristics thereof, being determined.

Precisions of the order of 0.1 mm can be obtained with this self-calibration method, whereas precisions below 0.1 mm and up to 0.01 mm in a cubic meter of volume may be obtained with the calibration method of the invention which will be described below.

Figure 2 shows a multi-camera system for the photogrammetric measurement of an object available in a measurement scenario (E) used for carrying out the calibration method of the invention.

The system comprises at least two cameras (C1, C2) for visualizing the measurement scenario (E), and a support structure (S) which is arranged in the measurement scenario (E).

The support structure (S) has a removable fixing point (S1, S2) for each of the cameras (C1, C2), each removable fixing point (S1, S2) of the support structure (S) having a center of reference (Zol, Zo2) which is calibrated with respect to a fixed center of reference (Zo) of the measurement scenario (E).

The calibration of the removable fixing points (S1, S2) of the support structure (S) with respect to the center of reference (Zol, Zo2) of the measurement scenario (E) can be performed using a laser tracker or a similar technique.

The support structure (S) will have as many previously calibrated removable fixing points as cameras required in the measurement scenario (E).

The use of the previously calibrated support structure (S) allows mounting and removing the cameras as many times as required, achieving a high level of precision repeatedly.

In addition to the previous calibration of the support structure (S), another step of the calibration process of the invention is to calibrate each camera (C1, C2) independently with respect to its fixing point (S1, S2) of the support structure (S).

To that end, a calibration element (T1, T2) which is the optimum calibration element for the camera (C1, C2), is used for each camera (C1, C2).

Each calibration element (T1, T2) has a set of references (r) which can be observed by the respective camera (C1, C2). The references (r), or fiducial points, of the calibration elements (T1, T2) are a series of markers, i.e., elements with a dark color that stands out against a light background. For example, flat sticker markers, or spherical markers which allow more precisely determining the center of the marker than sticker markers do, can be used. Additionally, the markers themselves may be reflective to improve precision.

At the end of the process, each camera (C) is calibrated at the level of intrinsic and extrinsic parameters with respect to its fixing point in the support structure (S).

## Claims

1. A calibration method for calibrating a multi-camera system for the photogrammetric measurement of an object available in a measurement scenario (E), **characterized in that** it comprises:
• using cameras (C1, C2) for visualizing the measurement scenario (E),
• using a support structure (S) which is arranged in the measurement scenario (E) and has a removable fixing point (S1, S2) for each of the cameras (C1, C2), wherein each removable fixing point (S1, S2) of the support structure (S) has a center of reference (Zol, Zo2) which has been previously calibrated with respect to a center of reference (Zo) of the measurement scenario (E),
• using an optimum calibration element (T1, T2) for each camera (C1, C2), each optimum calibration element (T1, T2) having references (r) which can be observed by the respective camera (C1, C2), and
• independently calibrating each camera (C1, C2), using its optimum calibration element (T1, T2), with respect to its fixing point in the previously calibrated support structure (S).

2. The calibration method according to the preceding claim, **characterized in that** first the cameras (C1, C2) are calibrated in the measurement scenario.

3. The calibration method according to claim 1, **characterized in that** the cameras (C1, C2) are calibrated in a station external to the measurement scenario.

4. A multi-camera system for the photogrammetric measurement of an object available in a measurement scenario (E), **characterized in that** it comprises:
• cameras (C1, C2) for visualizing the measurement scenario (E), and
• a support structure (S) which is arranged in the measurement scenario (E),
∘ the support structure (S) having a removable fixing point (S1, S2) for each of the cameras (C1, C2), wherein each fixing point (S1, S2) of the support structure (S) has a center of reference (Zol, Zo2) which is calibrated with respect to a fixed center of reference (Zo) of the measurement scenario (E).
